Europäisches Patentamt

European Patent Office

Office européen des brevets

(11) Numéro de publication: **0 248 250**
**A1**

(12) **DEMANDE DE BREVET EUROPEEN**

(21) Numéro de dépôt: **87107125.4**

(22) Date de dépôt: **16.05.87**

(51) Int. Cl.³: **H 02 G 1/08**
**G 02 B 6/44**

(30) Priorité: **21.05.86 LU 86432**

(43) Date de publication de la demande:
**09.12.87 Bulletin 87/50**

(84) Etats contractants désignés:
**AT BE CH DE ES FR GB IT LI NL SE**

(71) Demandeur: **TIRFIBRE S.A.**
**47a, rue de Sanem**
**L-4485 Soleuvre(LU)**

(72) Inventeur: **Michelis, Raymond**
**12, rue Winston Churchill**
**L-4485 Soleuvre(LU)**

(72) Inventeur: **Michelis, Patric**
**12, rue Winston Churchill**
**L-4485 Soleuvre(LU)**

(74) Mandataire: **Freylinger, Ernest T. et al,**
**c/o FREYLINGER & ASSOCIES Postfach 1153 46 rue du**
**Cimetière**
**L-1011 Luxembourg(LU)**

(54) **Procédé de pose et de tirage d'un câble dans un conduit et installation pour la mise en oeuvre de ce procédé.**

(57) Procédé de pose et de tirage d'un câble dans un conduit à l'aide d'un support mécanique utilisable notamment pour les câbles à fibres optiques. On achemine un tube souple (1), résistant à des efforts de traction et de torsion, servant de support mécanique et de protection continue, dans la direction du conduit. A une certaine distance avant son entrée dans le conduit, on incise le tube (1) substantiellement dans sa direction longitudinale et on écarte les lèvres de part et d'autre de l'incision (6). On introduit à travers l'ouverture ainsi formée, immédiatement en aval de l'incision (6) le câble (7) à poser dans le tube-support (1). Après l'introduction du câble (7), le tube (1) est refermé par le rapprochement des lèvres de la coupure. On introduit ensuite l'ensemble tube (1)-câble (8) ainsi formé dans le conduit en exerçant une traction uniquement sur le tube-support (1).

Fig.10

PROCEDE DE POSE ET DE TIRAGE D'UN CABLE DANS UN CONDUIT

ET INSTALLATION POUR LA MISE EN OEUVRE DE CE PROCEDE

La présente invention concerne un procédé et une installation de pose et de tirage d'un câble à l'intérieur d'un conduit, notamment un conduit enterré. Elle s'applique plus particulièrement à la pose de câbles de télécommunication par fibres optiques, dont on sait qu'ils sont particulièrement sensibles à toutes sollicitations mécaniques au cours de leur pose.

Dans la technique antérieure, le tirage de câbles fragiles sur de grandes longueurs a donné lieu à de nombreux problèmes, par exemple des cassures ou des déformations. On s'est alors mis à renforcer les câbles en les enrobant avec des éléments résistant à la traction et aux déformations. Le résultat en était que les câbles devenaient très lourds. Il était impossible de stocker de très grandes longueurs, et il était difficile de les fabriquer et à les manipuler. Aussi fallait-il développer des méthodes compliquées de pose de ces câbles lourds.

On connaît de l'art antérieur (DE-B-709857) également un procédé qui utilise un support plat, sous forme de bande, sur lequel le câble à tirer est posé. Cette bande, déformée en forme de demi-cylindre, sert à reprendre les efforts mécaniques de traction lors du tirage à travers le conduit. Après la pose, la bande est retirée du conduit et le câble reste seul dans le conduit. L'inconvénient d'une telle technique est que la bande peut se tordre lors du tirage avec effet que le câble glisse à côté de ce support en bande, qu'il frotte contre la paroi du conduit et s'endommage. Cette technique ne pourrait donc servir à tirer un câble fragile dans un conduit sur une longueur de plusieurs kilomètres.

La technique antérieure (FR-A-2497011) connait également l'application de tubes souples fendus pour abriter et protéger un câble, notamment un câble en fibre optique, lors de sa pose le long d'un mur par exemple,

2

les tubes étant fixés au mur. L'inconvénient d'une telle technique est que le tube fendu doit être conditionné en touret lors de son stockage avant d'être utilisé. Ce stockage conduit à ce que le tube souple se torde en hélice en s'ouvrant, avec le résultat qu'il y a une déformation et un écrasement permanents. On a remédié à ce phénomène en stockant ces tubes souples sous forme de morceaux rectilignes courts. Cette technique ne permet donc pas non plus la pose d'un tube en un seul morceau de plusieurs kilomètres. Aussi les tubes souples ne se prêtent pas à être tirés sur plusieurs kilomètres en résistant à un effort de quelque 1.500 kilos et plus. Cette technique antérieure à découvert ne peut pas s'appliquer à un conduit enterré.

La présente invention vise un procédé et une installation de pose et de tirage qui remédient aux inconvénients des techniques antérieures et qui répondent mieux aux exigences de la pratique, notamment en ne soumettant pas les câbles fragiles, tels que les câbles à fibres optiques, aux efforts de tirage lors de leur pose, notamment dans un conduit enterré, et de ce fait permettant des longueurs de tirage sur de grandes distances. Le procédé selon l'invention est caractérisé en ce qu'on achemine un tube souple résistant à des efforts de traction et de torsion, et servant de support mécanique et de protection continue dans la direction du conduit, en ce que, à une certaine distance avant son entrée dans le conduit, on incise le tube substantiellement dans sa direction longitudinale et on écarte les lèvres de part et d'autre de l'incision, en ce qu'on introduit immédiatement en aval de l'incision le câble à poser dans le tube souple à travers l'ouverture ainsi formée, en ce qu'en aval de l'introduction du câble, le tube est refermé par le rapprochement des lèvres de la coupure, et en ce qu'on introduit l'ensemble tube-câble ainsi formé dans le conduit par application d'une traction exercée uniquement sur le tube.

Dans un mode de réalisation du procédé selon

3                           0248250

l'invention, le tube-support est, après rapprochement des
lèvres de la coupure, fermé complètement, par exemple par
soudure.

Le tube-support est de préférence acheminé de
façon continue en direction du conduit et le câble est
introduit dans le tube-support également de façon
continue.

Par le fait que le câble est glissé dans son
tube-support sans qu'on exerce un effort de traction sur
lui, et que, une fois logé dans le tube-support, il n'est
non plus sollicité par des efforts mécaniques lors du
tirage dans le conduit, on évite toutes contraintes
susceptibles d'affecter les propriétés du câble, notamment de câbles dits fragiles tels que les câbles à fibres
optiques. Le procédé selon l'invention permet donc le
tirage de grandes longueurs de câble dans un conduit, ce
qui limite fortement le nombre des épissures.

Afin d'éviter un glissement relatif entre le
câble et le tube de support, il pourra être utile de
solidariser par des moyens connus le câble et son tube-
support au début de chaque opération de tirage.

Selon un mode de réalisation du procédé de l'invention, on introduit une matière de remplissage et/ou
de protection dans le tube-support, ce qui peut se faire
en même temps que l'introduction du câble dans le tube-
support. L'introduction de la matière de remplissage
et/ou de protection pourra se faire par un procédé d'injection.

Au lieu d'utiliser un simple tube souple extrudé
et non fendu comme support mécanique, le procédé selon
l'invention permet l'utilisation d'un tube souple multipoche permettant la pose de plusieurs câbles soit par
poche, soit dans les différentes poches, chaque poche
étant ouverte lors de l'opération par une coupe longitudinale.

La section du tube-support peut être circulaire,
carrée, ovale, ou avoir toute autre forme désirée suivant
les applications.

4

Le tube-support pourra avantageusement comprendre un renforcement le long de son contour à l'aide de nervures ou de dents permettant une meilleure résistance à la torsion lors du tirage et une diminution du frottement dans le conduit. Ces nervures ou dents servent également au guidage du tube souple lors de sa coupe, permettant une coupe régulière suivant une ou plusieurs génératrices ou hélices. Il est renforcé également par un ou plusieurs câbles de traction incorporés (en Kevlar, acier ou autre) reprenant les efforts de traction et permettant de le tirer jusqu'à 15 kilomètres et plus. Grâce à ce(s) câble(s) de traction incorporé(s), les parois du tube souple ainsi que les cloisons internes de séparation des différentes poches peuvent être très minces, ce qui réduit notablement le poids du tube et ce qui facilite une coupe rapide. Le(s) câble/s) de traction peuvent aussi servir de moyens de transport de signaux ou de courant électrique.

L'installation pour la mise en oeuvre du procédé selon l'invention comprend une table d'assemblage caractérisée par un dispositif de guidage du tube-support, un moyen de coupe du tube-support dans sa direction substantiellement longitudinale, des moyens d'écartement des bords de coupe, un élément d'introduction du câble, un dispositif de fermeture du tube-support et des moyens de tirage de l'ensemble tube-câble à travers la table d'assemblage.

D'autres caractéristiques et avantages de l'invention ressortiront de la description qui va suivre, en représentant quelques modes et formes préférentiels donnés à titre d'exemples non limitatifs, dans lesquels:

- la figure 1 est une coupe transversale d'un tube-support multipoche;

- la figure 2 est une coupe transversale d'une autre exécution d'un tube-support souple monopoche;

- la figure 3 représente une vue agrandie de l'endroit de la coupe d'une poche;

- la figure 4 représente un tube-support monopoche coupé suivant une hélice;

-la figure 5 décrit une autre exécution d'un tube-support souple de dimension notable;

- la figure 6 représente une coupe transversale d'unautre tube-support souple multipoche;

- la figure 7 représente une coupe d'un tube-support souple en forme de bande plate;

- la figure 8 décrit une exécution d'un tube-support contenant des poches en pyramide;

- la figure 9 représente le tube-support de la figure 8 sous forme enroulée;

-la figure 10 représente une exécution d'une table d'assemblage (vue d'en haut); et

- la figure 11 montre une vue en plan de cette table.

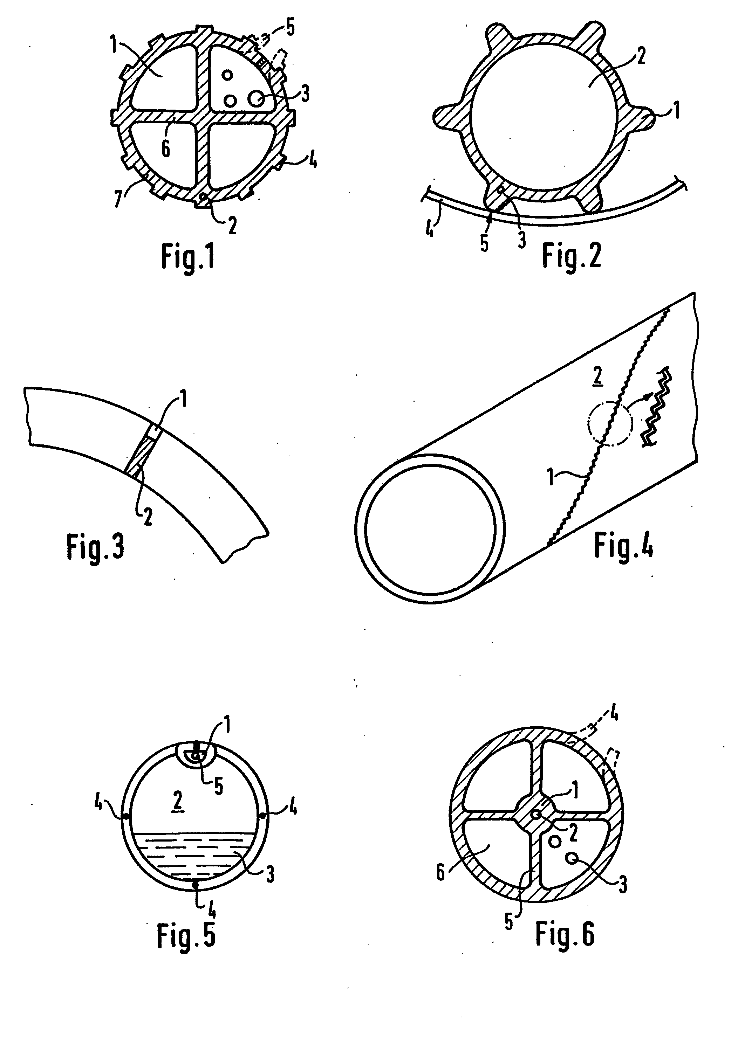

On va d'abord se référer à la figure 1 qui représente un tube-support multipoche. On reconnaît sur cette figure une enveloppe externe (7) et des cloisons internes (6) des séparation des différentes poches (1). L'enveloppe externe est fortifiée par des nervures telles que (4) permettant une meilleure résistance à la torsion et permettant ainsi de réduire le frottement dans le conduit. (2) constitue un câble de traction (par exemple en Kevlar) incorporé dans l'enveloppe externe, reprenant les efforts de traction lors de la pose. L'enveloppe externe (7) et les cloisons internes (6) ont, dans l'exemple donné, une épaisseur faible par rapport au diamètre du tube-support souple permettant de réduire notablement le poids du tube. Une des poches est montrée dans le cas où on a coupé la paroi, avec les bords (5) écartés (en traits interrompus), permettant d'introduire un ou plusieurs câbles.

Sur la figure 2, on reconnaît une denture (1) très prononcée en forme de tronc de pyramide arrondie permettant, lors de la pose dans le conduit (4), de réduire le contact pratiquement à une ou deux lignes (5).

La figure 3 montre une coupe en (1) pratiquée dans la paroi d'une poche d'un tube-support souple afin de l'ouvrir et de mettre un câble à l'intérieur. La

6

partie hachurée (2) représente une partie resoudée sur une profondeur moindre que l'épaisseur de la paroi de la poche pour refermer la poche, permettant de rouvrir plus facilement la paroi.

La figure 4 montre une coupe suivant une hélice (1), les bords étant en forme de dents de scie.

Sur la figure 5 on reconnaît en (1) une poche de dimension réduite pouvant recevoir un câble (6). La poche (2), beaucoup plus grande, peut servir à véhiculer un liquide (3) par exemple. (4) représente des câbles de renforcement à la traction.

A la figure 6, nous distinguons un noyau (1) plein qui contient un câble de renforcement, les différentes poches (6) se trouvant à la périphérie, séparées par des parois (5). En (4) sont représentés les bords repliés permettant l'introduction d'un câble (3).

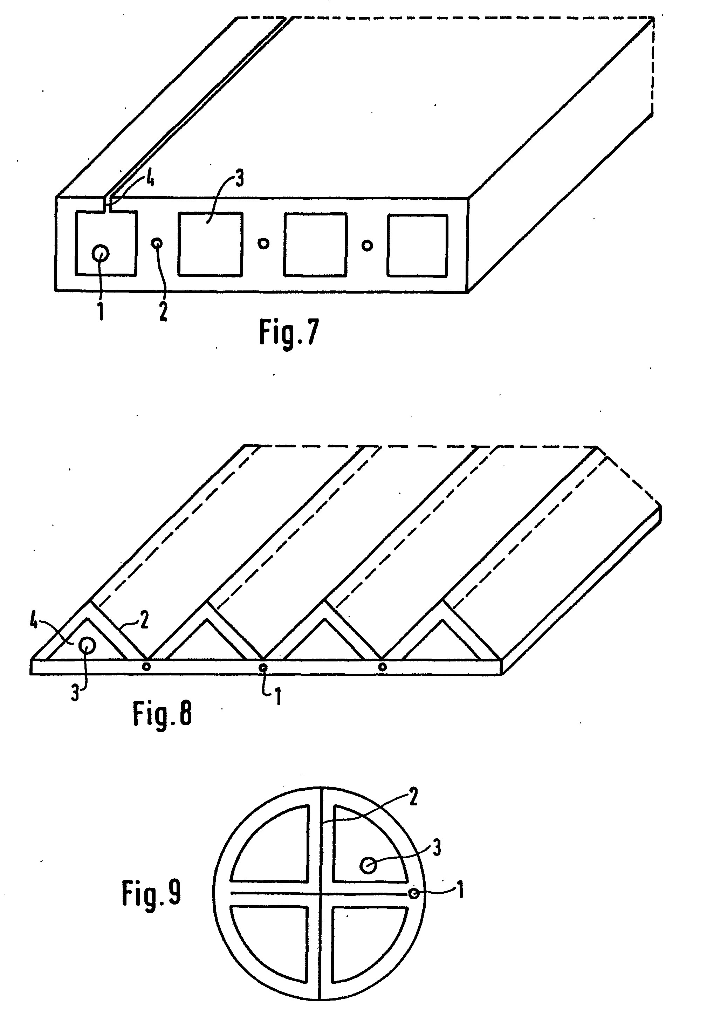

La figure 7 montre un tube-support souple de forme initiale plate, les poches (3) se trouvant à l'intérieur de la bande. (4) représente la coupe permettant de faire entrer un câble (1) et (2) représente un câble de renforcement. Cette bande est enroulée pour la pose. Le tube-support souple peut aussi être extrudé sous forme de bande plate sans poches, munie de nervures ou dents d'un côté, enroulée sur touret donnant lieu à un stockage économique du point de vue place occupée, la bande étant confectionnée en forme de tube sur la table d'assemblage.

La figure 8 montre une exécution analogue à celle de la figure précédente, comprenant des poches en forme de pyramide. La figure 9 montre cette forme dans l'état enroulé en forme de tube lors de sa pose.

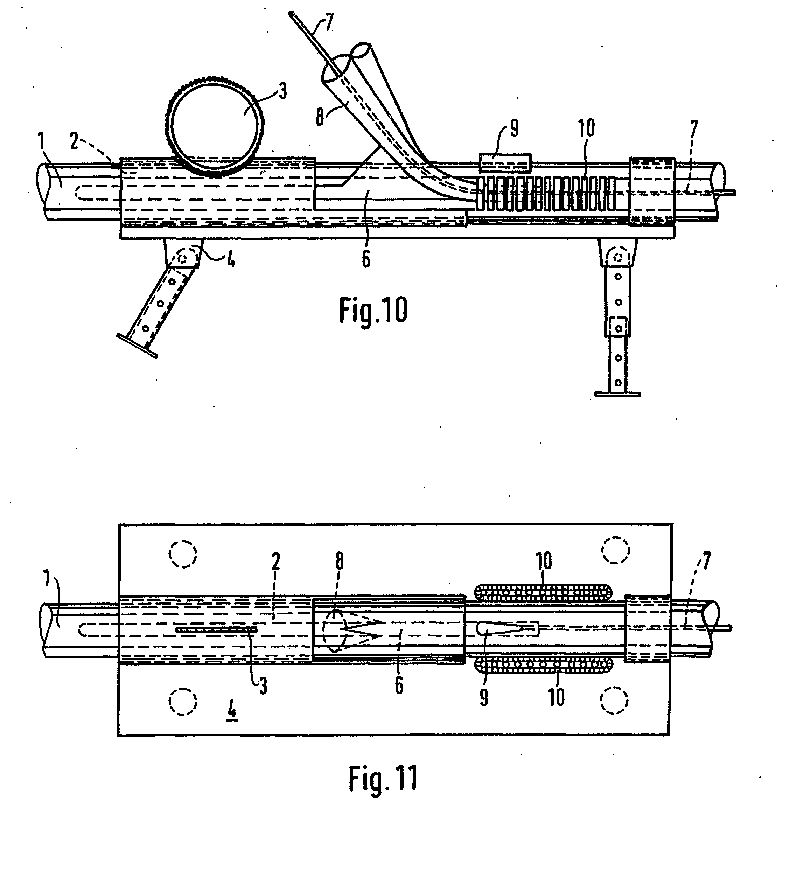

Le procédé de pose et de tirage d'un câble dans un conduit suivant la présente invention est décrit en se référant aux figures 10 et 11 qui montrent un mode de réalisation d'une installation pour la mise en oeuvre de ce procédé.

Les figures 10 et 11 montrent une vue de face (10) et d'en haut (11) respectivement d'une table d'assemblage (4). (1) représente le tube-support souple extrudé qui arrive sur la table d'assemblage (de la gauche dans la figure), qui passe dans un guide (2) et qui est coupé par une scie (3). Un élément (6), ayant un bord en forme de tranchant qui s'évase vers l'arrière, permet d'écarter les bords coupés. Cet élément (6) est chauffé électriquement et porte de chaque côté une rainure (non visible sur la figure) guidant les bords coupés et permettant de les rendre lisses, afin d'éviter une blessure du câble entrant. Ce même dispositif (6) peut aussi servir à écarter les bords de la coupe. La coupe peut aussi être réalisée suivant une ou plusieurs génératrices avec un profil en dents de scie, permettant une meilleure résistance aux efforts longitudinaux.

Dans le cas d'un tube multipoche, il faudrait alors que lors de l'extrusion du tube, les parois de séparation internes des différentes poches soient aussi en forme d'hélices. Cette forme en hélice donne au tube le même coefficient de flexibilité dans toutes les directions.

Les poches du tube souple se trouvent à sa périphérie, sous forme de cavités fermées lors de l'extrusion. Le noyau du tube est alors plein ou creux et comprend un câble incorporé résistant à la traction.

Certaines poches du tube souple peuvent être munies déjà lors de l'extrusion d'un ou de plusieurs câbles supportant l'extrusion, et plus tard on ajoute d'autres câbles.

L'avantage d'une coupe en hélice précitée réside dans le fait qu'elle donne au tube une stabilité accrue lors de la pose en courbe, sans que le tube non soudé ou soudé partiellement s'ouvre et laisse échapper le câble à poser. Dans le cas d'un tube soudé complètement, les efforts s'exerçant le long de la ligne de soudure sont minimalisés.

Le tube souple peut être constitué en toute matière adéquate, notamment en une matière thermoplastique ou similaire. Il peut aussi être réalisé en une matière possédant des propriétés spéciales (par exemple une matière diélectrique).

L'élément (6) peut aussi être dépourvu de chauffage. Dans ce cas les rainures possèdent des bords en forme de couteaux coupant les bavures des bords. Un élément en forme d'entonnoir (8) allongé sert de guide pour introduire le câble à poser dans le tube-support ouvert. En aval de l'entonnoir (8), les lèvres du tube-support (1) sont relâchées et le tube-support (1) se referme tout seul grâce à son élasticité. (9) représente un élément de fermeture qui dans le présent mode de réalisation est un élément thermique de soudage (par exemple une électrode) du tube (1) permettant de fermer ce dernier.

La soudure pourra se faire sur une profondeur plus petite que l'épaisseur de paroi du tube, afin de permettre après la pose son ouverture facile sans blesser le câble à l'intérieur.

L'élément thermique (9) est constitué par une plaque mince et allongée. Afin de permettre un soudage partiel ou local, cette plaque est, soit pivotante dans le but de l'écarter périodiquement du tube (1), soit alimentée par impulsion. Le tube-support souple passe alors dans une tireuse (10) à bandes sans fin pour le tirer à travers la table (4) et pour aider par une poussée à le faire avancer dans le conduit, la vitesse de la tireuse étant asservie aux vitesses de déroulement du tube (1) et du câble (7). La table (4) est munie après la tireuse (non visible sur la figure) d'une installation d'enrobage de blindage et de moyens d'application d'une couche antifriction entre le tube (1) et le conduit. Derrière l'élément de guidage (8) se trouve le dispositif, similaire à cet élément (8) par exemple, d'introduction de matière de protection, de positionnement ou autre.

La table (4) repose sur des pieds réglables qui s'adaptent automatiquement aux inclinaisons et directions du tube-support souple (1) défilant. Les moyens de coupe, constitués ici par une scie, peuvent être remplacés par un dispositif à couteau fixe.

Selon ce mode de réalisation, l'élément (6) joue le rôle de couteau, de dispositif d'écartement des bords, de dispositif pour rendre ces bords lisses et de dispositif de soudage. Pour cela, la température de l'élément est réglée de façon à lui conférer une température sur le bord tranchant facilitant une coupe, et une température à la partie d'écartement, munie des rainures, réalisant le lissage. A la sortie, la température des bords est telle que, après l'introduction du câble dans le tube, les bords possèdent encore une température suffisante pour un auto-soudage, ceci étant facilité par la pression exercée par un dispositif à rouleaux ou par la tireuse qui suit. Une répartition convenable de la température dans cet élément (6) est réalisée par l'emploi de matériaux de conduction thermique différente sur le bord tranchant et sur l'arrière s'évasant.

Selon un mode d'opération avantageux, le câble (7) se retrouve à l'intérieur du tube (1) avec une légère surlongueur en forme d'ondulation permettant d'éviter pendant les opérations de pose des efforts dans le câble lors du tirage dans les courbes, et après pose permettant d'éviter des efforts de traction résultant d'une dilatation thermique. La vitesse de déroulement du câble est légèrement plus élevée que celle du tube souple, les deux vitesses de déroulement étant asservies l'une à l'autre par l'intermédiaire d'instruments de mesure des vitesses de déroulement et d'un dispositif de régulation mécanique, électrique ou électronique.

Au début de l'opération de tirage, le tube (1) et le câble (7) à poser sont solidarisés par des moyens connus pour éviter un glissement relatif entre les deux. Le tube-support est aussi solidarisé à l'aide de cales autoserrantes à une chaîne ou à des câbles de traction permettant le tirage à travers le conduit, cette technique de tirage d'un câble étant connue en soi par l'homme d'art.

Bien que le procédé selon l'invention ait été décrit dans son mode de réalisation préféré, c.-à-d. en utilisant un tube-support extrudé non fendu, le procédé selon l'invention pourra être également mis en oeuvre, avec moins d'avantages bien sûr, en utilisant soit un tube-support extrudé comme profil ouvert le long d'une de ses génératrices, soit un tube-support extrudé non fendu et coupé immédiatement après refroidissement. Ces deux cas donnent lieu aux problèmes de stockage déjà mentionnés pour les très grandes longueurs. Dans le premier cas, le tube est soudé par point ou partiellement après sa fabrication. Dans le deuxième cas, la coupe ne se fait que partiellement. Ces deux cas de soudure partielle ou de coupe partielle, malgré les problèmes de stockage, permettent un gain de temps et de travail de traction lors de la pose du câble, tout en évitant une grande partie du travail de coupe. La vitesse de tirage peut alors être augmentée. Pourtant la méthode préférée est celle du tube-support extrudé, non fendu et coupé uniquement lors de la pose.

0248250

## REVENDICATIONS

1. Procédé de pose et de tirage d'un câble dans un conduit à l'aide d'un support mécanique, caractérisé en ce qu'on achemine un tube souple (1), résistant à des efforts de traction et de torsion, servant de support mécanique et de protection continue, dans la direction du conduit, en ce qu'à une certaine distance avant son entrée dans le conduit, on incise le tube (1) substantiellement dans sa direction longitudinale et on écarte les lèvres de part et d'autre de l'incision (6), en ce qu'on introduit à travers l'ouverture ainsi formée, immédiatement en aval de l'incision (6) le câble (7) à poser dans le tube-support (1), en ce qu'en aval de l'introduction du câble (7) le tube (1) est refermé par le rapprochement des lèvres de la coupure, et en ce qu'on introduit l'ensemble tube(1)-câble(8) ainsi formé dans le conduit en exerçant une traction uniquement sur le tube-support (1).

2. Procédé de pose et de tirage d'un câble suivant la revendication 1, caractérisé en ce qu'après le rapprochement des lèvres de la coupure, le tube-support (1) est fermé complètement.

3. Procédé de pose et de tirage d'un câble suivant la revendication 2, caractérisé en ce que la fermeture du tube-support (1) se fait par soudure.

4. Procédé de pose et de tirage d'un câble suivant l'une des revendications 1 à 3, caractérisé en ce que le tube (1) est acheminé de façon continue en direction du conduit et que le câble (7) est introduit dans le tube-support (1) également de façon continue.

5. Procédé de pose et de tirage d'un câble suivant l'une des revendications 1 à 4, caractérisé en ce que le tube-support (1) est extrudé sur place.

6. Procédé de pose et de tirage d'un câble suivant l'une des revendications 1 à 5, caractérisé en ce que la coupe du tube-support (1) est faite suivant une de ses génératrices.

7. Procédé de pose et de tirage d'un câble suivant l'une des revendications 1 à 5, caractérisé en ce que la coupe du tube-support (1) est faite suivant un tracé hélicoïdal.

8. Procédé de pose et de tirage d'un câble suivant l'une des revendications 3 à 7, caractérisé en ce que le tube-support (1) n'est resoudé que sur une partie de l'épaisseur de sa paroi.

9. Procédé de pose et de tirage d'un câble suivant l'une des revendications 3 à 7, caractérisé en ce que le tube-support (1) n'est resoudé que de façon intermittante.

10. Procédé de pose et de tirage d'un câble suivant l'une des revendications 1 à 9, caractérisé en ce qu'on introduit une matière de protection et/ou de positionnement dans le tube-support (1) après l'introduction du câble (7).

11. Procédé de pose et de tirage d'un câble suivant l'une des revendications 1 à 10, caractérisé en ce que la coupe du tube-support (1) se fait suivant un profil en dents de scie.

12. Procédé de pose et de tirage d'un câble suivant l'une des revendications 1 à 11, caractérisé par l'usage d'un tube-support (1) souple renforcé sur sa périphérie par des nervures ou des dents.

13. Procédé de pose et de tirage d'un câble suivant l'une des revendications 1 à 12, caractérisé par l'usage d'un tube-support (1) souple renforcé par un ou plusieurs câbles de traction.

14. Procédé de pose et de tirage d'un câble suivant l'une des revendications 1 à 13, caractérisé par l'usage d'un tube-support (1) multipoche.

15. Installation pour la mise en oeuvre du procédé suivant l'une des revendications 1 à 14, caractérisée par une table d'assemblage (4) comprenant un dispositif de guidage (2) du tube-support (1), un moyen de coupe (3) du tube-support (1) dans sa direction substantiellement longitudinale, des moyens d'écartement (6) des

0248250

bords de coupe, un élément d'introduction (8) du câble (7) dans le tube-support (1), un dispositif de fermeture (9) du tube-support (1) et des moyens de tirage (10) de l'ensemble tube-câble à travers la table d'assemblage.

16. Installation suivant la revendication 15, caractérisée en ce que le dispositif de fermeture (9) du tube-support est un moyen de soudure.

17. Installation suivant l'une des revendications 15 ou 16, caractérisée en ce qu'elle comporte des moyens pour rendre les bords de coupe lisses.

18. Installation suivant l'une des revendications 15 ou 17, caractérisée en ce qu'elle comprend des moyens de mesure et de régulation de la vitesse d'acheminement du tube-support et de la vitesse d'introduction du câble, les deux vitesses étant asservies l'une à l'autre par ces moyens.

19. Installation suivant l'une des revendications 15 à 18, caractérisée en ce qu'elle comporte des moyens d'introduction d'une matière de protection et/ou de positionnement dans le tube-support.

20. Installation suivant l'une des revendications 15 à 19, caractérisée en ce que la table d'assemblage (4) est montée sur des pieds réglables s'adaptant aux inclinaisons et directions du tube-support (1) défilant.

0248250

1/3

Fig.1

Fig.2

Fig.3

Fig.4

Fig.5

Fig.6

**Fig.7**

**Fig.8**

**Fig.9**

Fig.10

Fig.11

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 389 980 (PIRELLI)<br><br>* Page 10, lignes 2-30; figures 1-3 * | 1,2,4,<br>6,15 | H 02 G 1/08<br>G 02 B 6/44 |
| A,D | FR-A-2 497 011 (GAUTIER)<br><br>* Page 9, lignes 1-17; figures 1-3 * | 1,2,4,<br>6,15 | |
| A | DE-B-2 651 725 (AEG)<br><br>* Colonne 1, lignes 3-23; figures 1,2 * | 1,2,4,<br>6,15 | |
| A | WO-A-8 600 283 (ARNCO)<br>* Page 1, résumé; figures 1-5 * | 1,12 | |
| A | EP-A-0 076 207 (L.T.T.)<br>* Page 1, résumé; figures 1,2,4 * | 1,12 | DOMAINES TECHNIQUES RECHERCHES (Int. Cl.4)<br><br>H 02 G<br>G 02 B<br>H 01 B |
| A | GB-A-2 158 963 (TELEPHONE CABLES)<br>* Page 1, ligne 101 - page 2, ligne 10; figures 1-4 * | 1,13,<br>14 | |
| A | FR-A-2 489 002 (COMPANY LYONNAISE DE TRANSMISSIONS OPTIQUES, SA)<br>* Figures 1-4 * | 1,10,<br>14 | |
|  | --- -/- | | |

Le présent rapport de recherche a été établi pour toutes les revendications

| Lieu de la recherche | Date d'achèvement de la recherche | Examinateur |
|---|---|---|
| LA HAYE | 01-09-1987 | LOMMEL A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82

**Office européen des brevets**

**RAPPORT DE RECHERCHE EUROPEENNE**

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl.4) |
| A,D | DE-C- 709 857 (SIEMENS)<br>* Page 2, lignes 75-86; figures 1,2 *<br><br>----- | 1 | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 01-09-1987 | LOMMEL A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82